# EUROPEAN PATENT APPLICATION

(11) **EP 4 785 787 A1**
(43) Date of publication of application: **05.08.2026**
(21) Application number: 26155041.2
(22) Date of filing: 29.01.2026
(51) Int. Cl.: A01M 1/22

(54) **DEVICE FOR THE SELECTIVE ELECTROCUTION OF FLYING INSECTS**

(30) Priority: 29.01.2025 IT 202500001503
(71) Applicant: Gaggioni, Luca, 16148 Genova (GE) (IT)
(72) Inventor: Gaggioni, Luca, 16148 Genova (GE) (IT)
(74) Representative: Bottino, Giovanni

(57) **Abstract**

Device for the selective electrocution of flying insects comprising a support frame (1), which support frame (1) delimits an area (10) within which area (10) at least a first (2) and at least a second (3) conductor wire are arranged,
the first (2) and second (3) conductive wires being connected to a power source at a first and second voltage level, respectively,
the first (2) and second (3) conductive wires being arranged inside the support frame (1) so as to form rows parallel to each other (20, 30) and in such a way that the rows formed by the first conductive wire (20) alternate with the rows formed by the second conductive wire (30),
each row being spaced apart from the adjacent rows by a predetermined distance;
there is a control unit (5) interposed between the power supply source and the two conductive wires (2, 3), said control unit (5) comprising a high-voltage circuit (53) configured to generate electrical pulses.

## Description

The present invention relates to a device for the selective electrocution of flying insects comprising a support frame, which support frame delimits an area within which at least a first and at least a second conductive wire are arranged.

The first and second conductive wires are connected to a power source at a first and second voltage level, respectively.

Furthermore, the first and second conductive wires are arranged within the support frame so as to form rows parallel to each other and in such a way that the rows formed by the first conductive wire alternate with the rows formed by the second conductive wire.

Each row is spaced from the adjacent rows by a predetermined distance.

As will be evident from the following description, this predetermined distance is preferably between 15 millimeters and 25 millimeters.

The above is the common configuration of electric harps known in the state of the art.

Electric harps are used to combat the Asian hornet (Vespa velutina) and other types of wasps such as Vespa orientalis, which in recent decades has expanded its range due to climate change and rising temperatures, spreading even to more northern regions. Compared to the Vespa velutina, the Vespa orientalis is less aggressive towards bees, but can still cause significant damage to hives, especially in times of scarcity of other resources.

The Vespa velutina is a species that has spread throughout Europe since 2004, the year it was first sighted in France, apparently due to a shipment of tableware from China that arrived in France.

Hidden inside the tableware was a primary colony of Vespa velutina, which overwintered in France and spread throughout the rest of Europe, where it reproduced and proliferated.

The Asian hornet poses a serious threat to beehives, as European bees, unlike Chinese bees, have not yet developed a defense strategy to protect their hives from the massive predation of the vespa velutina.

Vespa velutina wasps have a stable flight, hunt in swarms, and position themselves in front of the entrance to hives to ensure that they strike all bees entering and leaving the hive.

The problem is that the bees inside the hive do not leave it to avoid being preyed upon by the wasps, they stop pollinating, and, as a result, the hive collapses.

In particular, the Vespa velutina mainly hunts by stationing itself in front of honeybee hives, waiting for them to leave or return. Once it spots a bee, it quickly captures it, decapitates it, and takes the thorax to the hive to feed the larvae.

Several wasps may collaborate in so-called 'pressure predation', terrorizing the bees and reducing their nectar and pollen gathering activity, causing a progressive weakening of the colony, leading to its collapse.

When the hive is greatly weakened, the wasps can attack it in mass, killing the adult bees and feeding on the larvae, leading to the complete destruction of the colony.

Electric harps are the solution currently in use, as they have a first and second conductor wire arranged in alternating rows spaced less than the wingspan of velutin wasps, so that when the wasps pass through, they create a voltaic bridge between the two conductor wires and are electrocuted.

Electric harps are placed on either side of the row of hives, one at the beginning and one at the end, arranged perpendicular to the opening of the hives. Additional harps are often added in the same line if the distances and predation are considerable.

This peculiar positioning is dictated by the movement pattern of vespa velutina wasps, which position themselves in front of the hives, following a path that involves lateral movements.

State-of-the-art electric harps use direct current without any control over the generation of the current that electrocutes the wasps.

The state-of-the-art harps, in fact, are unreliable, both from the point of view of user safety and from the point of view of ensuring continuity of operation.

There is therefore an unmet need in the state-of-the-art devices to overcome the above disadvantages.

The present invention achieves the above objectives by providing a device for the selective electrocution of flying insects as described above, in which a control unit is interposed between the power source and the two conductive wires.

The control unit comprises a high-voltage circuit configured to generate electrical pulses.

The presence of the control unit allows the current flowing between the first and second conductive wires to be managed, making the device safer than the electric harps known in the state of the art.

In fact, these electric harps have a direct connection of the conductive wires to the power source, which powers both conductive wires, without the user being able to control or interrupt the power supply.

Furthermore, the control unit belonging to the device that is the object of this invention generates pulses in order to preserve the life of the power source.

The electric harps are to be installed near beehives, located in open areas that are unlikely to have connections to the electricity grid, so the electric harps are powered by batteries, both rechargeable and non-rechargeable.

Preserving battery life is therefore crucial to ensuring the continuous operation of electric harps, especially considering that beekeepers may be absent for long periods of time and may have difficulty replacing/charging batteries.

In order to function properly, electric harps must always be in operation; it is not possible to activate the harps only when a flying insect, passing between the first and second conductive wires, creates a voltaic bridge between the two conductive wires.

The generation of pulses therefore represents the best compromise between the requirement for continuous operation of the harp and battery preservation.

As will be described later, one of the main aspects of the patent application in question, in addition to ensuring a safe and efficient device in terms of operation, is careful control and regulation of the current generated.

In fact, according to one embodiment, the control unit includes means for regulating the frequency of the pulses generated.

Furthermore, according to an improvement, the control unit includes switching means for interrupting the power supply to the first and second conductive wires.

These switching means can be activated manually, i.e., by a user, if they wish to interrupt the power supply to the conductive wires, for example, for maintenance or cleaning of the harp.

Alternatively, or in combination, the activation of the switching means can be made automatic, based on certain operating conditions of the control unit and thanks to the presence of components integrated within the control unit, which will be described below.

Obviously, the switches are activated, both manually and automatically, in a reversible manner, i.e., they can deactivate/activate the power supply to the conductive wires continuously and constantly.

According to one possible embodiment, one or more detection sensors configured to detect one or more corresponding parameters may be provided.

These parameters may include device operating parameters and/or environmental parameters relating to the environment surrounding the device (light, humidity, heat, or the like).

Advantageously, a threshold value can be established for each parameter, so that when this threshold value is reached or exceeded, the control unit activates the switching means to deactivate the power supply to the device that is the object of the present invention.

According to an embodiment, it is possible to provide that these detection sensors include at least one rain detection sensor, which rain detection sensor is connected to the switching means in such a way as to interrupt the power supply to the first and second conductive wires when a certain humidity threshold value is reached.

In fact, in case of rain, wasps do not hunt, so the device covered by this invention avoids activating the conductive wires, saving battery power.

Since the device covered by this invention aims to create a controllable and safe electric harp, according to one implementation variant, means for adjusting the humidity threshold value may be provided.

The same considerations made for the rain sensor also apply to an additional component that can be found in the control unit belonging to the device covered by this invention.

According to an improvement, in fact, the detection sensors include a light detection sensor, which is connected to the switching means, so as to interrupt the power supply to the first and second conductive wires when a certain light threshold value is reached.

In this case too, means for adjusting the light threshold value may be provided.

As will be evident from the illustration of some embodiments, the control unit develops an innovative operating metric that provides for:
- delivery of high voltage pulses, temporised and non-continuous;
- presence of a microprocessor as a central unit for power and safety management;
- self-diagnosis of power supplies, with automatic disabling of high voltage outside the nominal limits;
- use of external sensors (light and rain) as functional elements to avoid energy waste and unsuitable operating conditions;
- active protection against short circuits, with current limitation and overheating prevention.

Overall, the control unit is configured as an intelligent embedded high-voltage energy management system, conceptually distinct from state-of-the-art systems.

Furthermore, as mentioned above, since beehives are often located in open countryside and access to the electricity grid is not easy, the power source consists of a rechargeable battery.

In combination with this feature, it is possible to provide a charging circuit comprising photovoltaic panels.

Therefore, the presence of a light sensor is particularly advantageous, avoiding strain on the battery during hours when it cannot be recharged, such as at night.

According to a further embodiment, the control unit includes one or more light elements configured to indicate the operating status of the device and/or the connection of the first and second conductive wires and/or the generation of pulses.

Through the illustration of some examples, a possible operation of these light elements will be illustrated, allowing users to assess the correct operation and operating status of the device that is the subject of this invention.

Finally, according to a further embodiment, the device that is the subject of this invention includes a cage for collecting flying insects that are electrocuted by the first and second conductive wires.

The collection cage has at least one wall with a plurality of holes, which have predetermined dimensions smaller than the dimensions of the Asian hornet.

Generally, the Asian hornet has a length between 12 millimeters and 28 millimeters and a wingspan between 20 millimeters and 40 millimeters.

The collection cage has a dual function.

Firstly, it serves to collect insects that have been electrocuted and killed by the pulses transmitted by the conductive wires. Secondly, it serves to trap insects that are not killed but simply stunned or mutilated by the pulses transmitted by the conductive wires, as a result of which they fall into the cage and remain trapped there.

These and other features and advantages of the present invention will become clearer from the following description of some examples illustrated in the attached drawings, in which:
Figure 1 illustrates a schematic diagram of a possible embodiment of the device that is the subject of the present invention;
Figure 2 illustrates a schematic diagram of a possible embodiment of the control unit belonging to the device that is the subject of the present invention;
Figures 3a to 3d illustrate some details of the collection cage belonging to the device that is the object of the present invention.

It should be noted that the figures attached to this patent application illustrate only some possible embodiments of the device that is the object of the present invention, in order to better understand its advantages and characteristics as described.

These embodiments are therefore intended for illustrative purposes only and are not limiting to the inventive concept of the present invention, namely that of creating a device for the selective electrocution of flying insects that allows for precise control of the current generated, ensuring continuity of operation and safety for users.

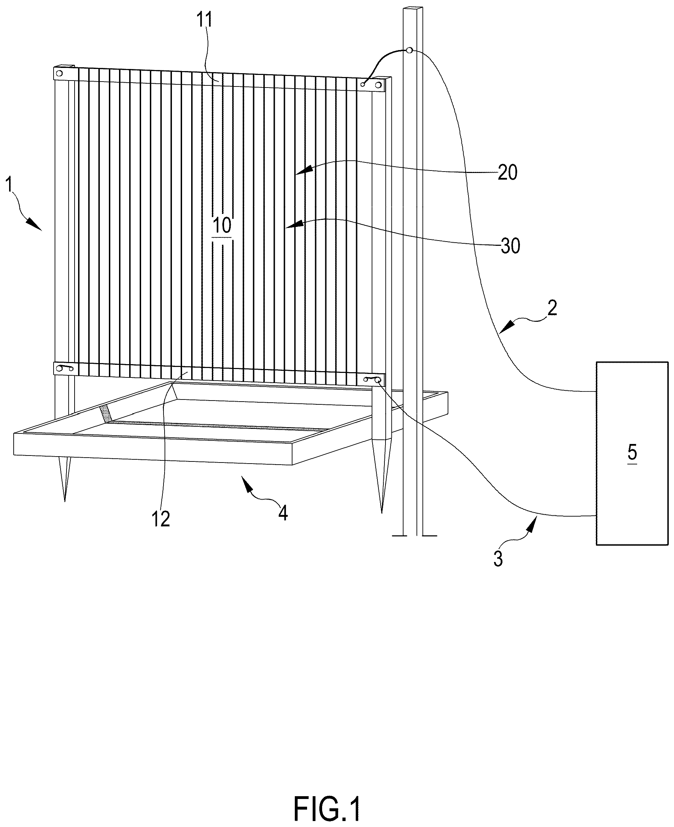

With particular reference to Figure 1, a schematic diagram of a possible embodiment of the device for the selective electrocution of flying insects that is the subject of this invention is illustrated.

The device comprises a support frame 1 that delimits an area inside the frame 10.

There is also a first conductor wire 2 and a second conductor wire 3, which are connected at one end to a power source, described below, so that the first conductor wire 2 and the second conductor wire 3 are at different voltage levels.

Furthermore, the first conductor wire 2 and the second conductor wire 3 are arranged within the area 10 delimited by the support frame, so as to form parallel and alternating rows 20 and 30.

In particular, the first conductor wire 2 is arranged within the area 10 so as to form a plurality of parallel rows 20, as is the second conductor wire 3, but in such a way that between two rows 20 formed by the first conductor wire 2 there is always a row 30 formed by the second conductor wire, and vice versa.

To obtain the configuration shown in Figure 1, it is sufficient for each conductor wire 2 and 3 to be wound around the upper portion 11 and the lower portion 12 of the support frame, until a homogeneous distribution of the conductor wires 2 and 3 is obtained within zone 10.

Alternatively, according to a preferred embodiment, it is possible to provide that each row 20 and 30 consists of single conductive wires, so that each row 20 and 30 has a first terminal connected to the upper portion 11 and a second terminal connected to the lower portion 12.

In combination with this configuration, it is possible to provide that wires 2 and 3, connected to two different potentials, extend along the upper portion 11 of the frame 1, so that all rows 20 are connected with their own terminal to conductor wire 2 and all rows 30 are connected with their own terminal to conductor wire 3.

According to an improvement, these terminals are connected to the conductive wires 2 and 3 by means of elastic elements, such as springs, made of conductive material.

The other terminals of the rows 20 and 30 are connected to the lower portion 12 of the frame 1.

Preferably, the upper portion 11 and the lower portion 12 are made of insulating material.

The spacing between a row 20 and a row 30 is preferably constant and equal to a value less than the wingspan of the insects to be captured, preferably less than the wingspan of wasps.

Figure 1 illustrates a specific configuration of the conductive wires 2 and 3, but any configuration can be used that allows spaces to be created between wire 2 and wire 3 that are smaller than the wingspan of the insects to be captured.

For example, a lattice could be used, as well as a distribution of rows parallel to each other and perpendicular to the upper portion 11, or a distribution of rows inclined with respect to any of the sides of the support frame 1.

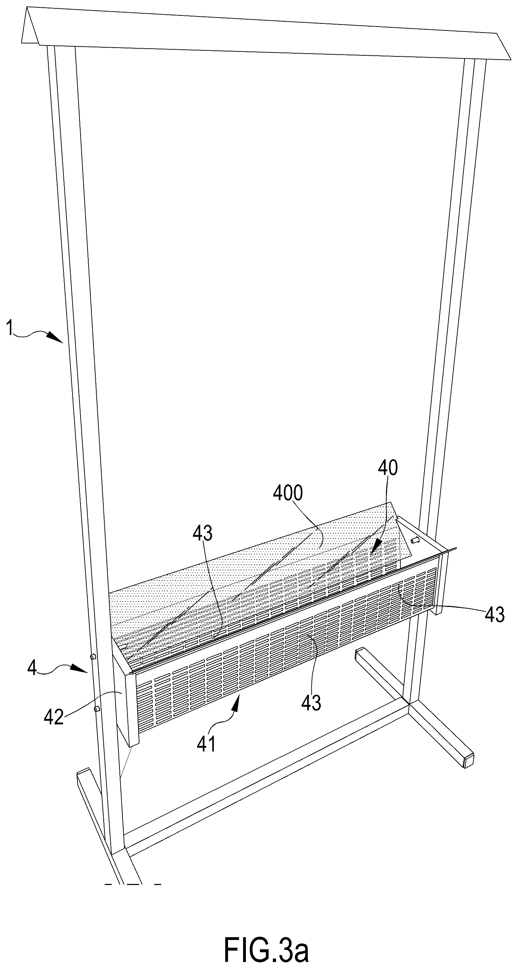

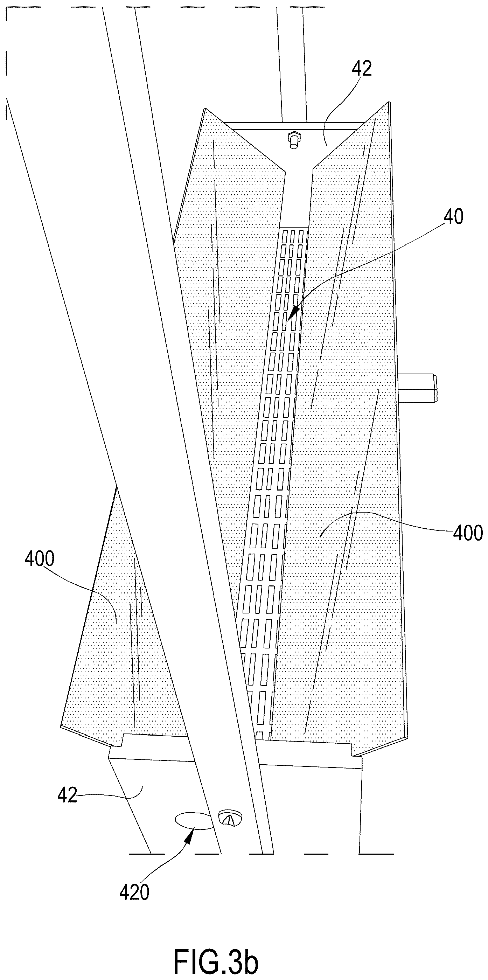

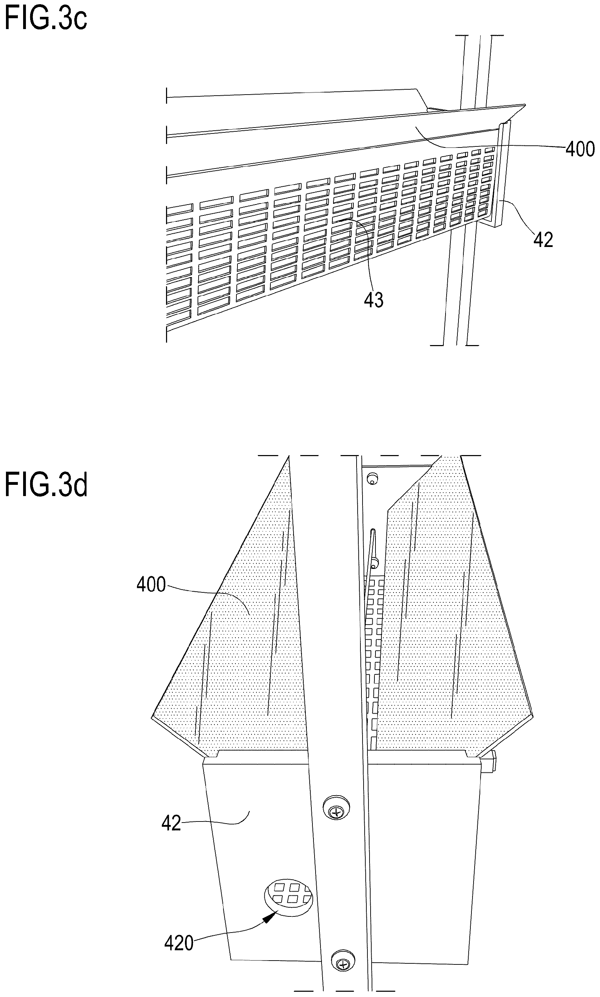

The device that is the object of the present invention also features a collection cage 4, which will be illustrated in detail below with reference to Figures 3a to 3d.

As anticipated, the conductive wires 2 and 3 are connected at one end to a power source so as to present two different voltage levels.

According to the variant illustrated in Figure 1, the two conductive wires are connected at one end to a control unit 5.

Control unit 5 can be inserted between conductive wires 2 and 3 and the power source.

Preferably, however, control unit 5 integrates the power source within itself.

In particular, the present invention provides that control unit 5 manages the power supply to conductive wires 2 and 3.

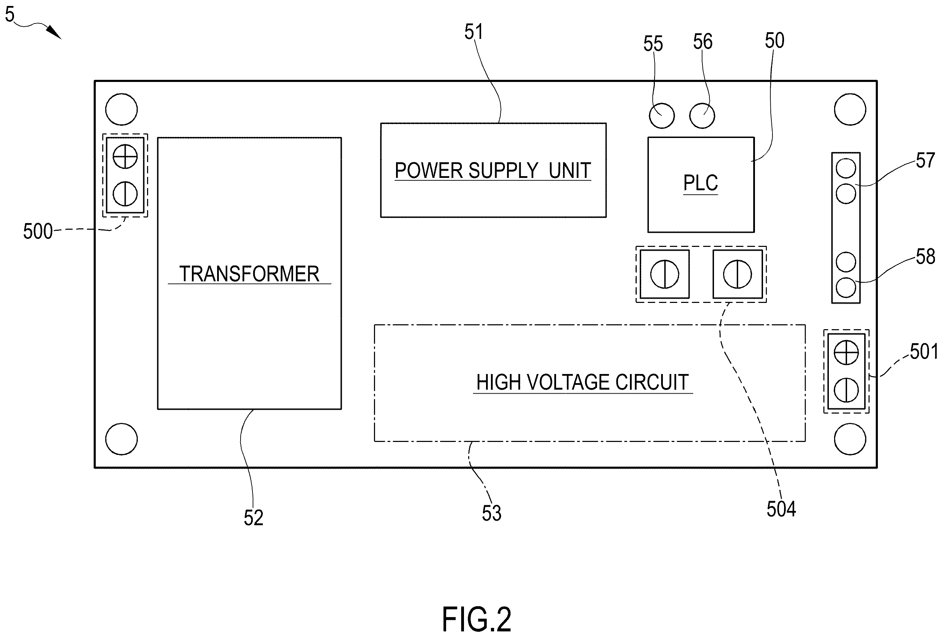

Figure 2 illustrates a schematic diagram of control unit 5.

Control unit 5 is a PCB (printed circuit board) that includes a number of integrated components.

First of all, the control unit has a microprocessor 50, which oversees the operation of the control unit according to specific methods that will be explained later.

According to the variant illustrated in Figure 2, the control unit 5 has a power supply unit, consisting of a battery 51, which is responsible for powering the control unit itself.

It is possible that the battery 51 is also responsible for powering conductive wires 2 and 3.

However, according to the variant shown in Figure 2, there are input contacts 500 through which the control unit connects to an external power source responsible for powering conductive wires 2 and 3.

Conductive wires 2 and 3 are connected to the control unit through corresponding output contacts, indicated in Figure 2 with the number 501.

The control unit 5 therefore uses the current from the input contacts 500 to generate pulses to be sent to conductive wires 2 and 3.

These pulses are generated by a transformer 52 and a high-voltage circuit 53.

The microcontroller 50 regulates the operation of circuit 53 in order to keep the pulse generation active or disable it by activating switches (not shown in the figure).

Pulse generation occurs continuously under normal operating conditions of control unit 5.

The control unit also has means for regulating 54 the frequency of the pulses.

There are also two LEDs, a green LED 55 and a red LED 56.

LED 55 lights up during normal operation of control unit 5, while LED 56 lights up red in the event of a malfunction or failure of control unit 5.

The green LED 55 can light up either with a steady light or with a pulsating light, the pulsations of which vary according to the pulse frequency set with the adjustment means 54.

In particular, the power supply must be between 10 and 14 volts DC and stabilized.

The nominal current consumption is approximately 250mA with peaks up to 1.5A, therefore the power supply must provide at least 2A.

If the power supply is less than 10V or greater than 14V, the high voltage output is disabled and the red LED 56 flashes, while the green LED 55 stops reporting the output pulse frequency.

When the circuit is powered correctly, the green LED 55 reflects the pulse frequency setting, preferably between 1 and 4 Hz, and high voltage is present at the output.

As mentioned above, the input voltage should preferably be between 10 and 14 Volt, the input current between 0.5 and 1.6 A, while the output voltage is 1200 DC ± 10% and the output current (in the event of an insect colliding with conductive wires 2 and 3) is between 5 mA and 15 mA DC.

According to an improvement, it is possible to adjust the output current between 0.5 and 3 mA; however, since the output voltage is not regulated, a variation in the same may occur.

Based on the above, it is clear that control unit 5 allows the device of the present invention to be configured as an embedded high-voltage intelligent energy management system, designed to operate only when necessary and only under suitable environmental and electrical conditions, reducing energy waste, operational risks, and abnormal operating conditions.

Adaptive energy management can be achieved using the aforementioned detection sensors.

The device covered by this invention uses these sensors, such as light and/or rain sensors, to automatically enable or disable the supply of power, in particular high voltage. In conditions of absence of light (night) or presence of rain or humidity, the supply of high voltage is automatically disabled, avoiding energy waste, unnecessary operation, and electrical risks in unfavorable environmental conditions.

According to a further embodiment, the device of the present invention features a power supply self-diagnostic system, i.e., a self-diagnostic system for supply voltages that constantly checks that the input voltage is within the nominal operating parameters.

In the event of voltage below or above threshold values and/or permitted limits, the system automatically disables the high voltage supply, preventing malfunctions, stress on electronic components, and hazardous conditions. This control ensures reliable operation even in the presence of unstable power supplies, such as battery systems or photovoltaic systems.

Furthermore, according to a further implementation variant, the device covered by this invention features an active short-circuit protection system, i.e., a short-circuit detection system on the output contacts (on the high-voltage output) that automatically limits the current supplied. This mechanism prevents overheating, damage to the device, and fire hazards, allowing the device to enter a protection mode without suffering permanent damage.

Still with reference to Figure 2, control unit 5 also includes a light sensor 57 and a rain sensor 58.

Although sensors 57 and 58 detect different parameters, namely rain and light, they can both be set by configuring specific threshold values.

When the threshold value is reached, the microprocessor 50 will interrupt the circuit, preventing the generation of pulses.

Following an interruption in the generation of pulses due to the threshold values being reached, the green LED 55 will be turned off.

Advantageously, therefore, the high-voltage circuit 53 includes a MOSFET controlled by the microprocessor 50, through which the DC voltage is transformed into an AC voltage. The high-frequency controlled MOSFET controls the transformer 51, preferably consisting of a 1:20 transformer.

The frequency of the MOSFET is adjusted from 70 to 110 kHz, and the output voltage of the transformer 52 is sent to a diode multiplier (4 stages) to obtain 1200 VDC.

Microprocessor 50 has the following functions: - enables the frequency from 1 to 4Hz - checks whether the high output voltage is short-circuited and, if so, limits the current to 20mA - in normal operation, the current supplied is around 2/3 mA
- enables/disables the voltage on conductive wires 2 and 3, if guided by rain and light sensors
- verifies that the supply voltage is within the nominal operating parameters of the circuit,
- uses a voltage regulator to supply the correct voltage to the logic part of control unit 5.

As is clear from the above description, the device covered by this invention takes a systemic approach to safety and efficiency.

In fact, the combination of impulsive and timed high voltage supply, and/or conditional activation by detection sensors and/or self-diagnosis of power supplies and/or active current control configures the device covered by this invention as an intelligent power system.

In this system, electrical safety, functional selectivity, and energy efficiency are structural elements of operation and not simply accessory features.

Finally, as anticipated in relation to Figure 1, the device that is the subject of this invention features a collection cage 4.

The collection cage 4 is located below the support frame 1, so as to collect insects that, once electrocuted, fall by gravity into the collection cage 4.

A possible embodiment of the collection cage 4 is illustrated in Figures 3a to 3d.

According to this embodiment, the collection cage 4 has a parallelepiped shape with a top wall 40, a bottom wall 41, two end walls 42, and two side walls 43.

The top wall has an opening to allow the electrocuted insects to enter and, in order to facilitate this entry, has two inclined surfaces 400 that converge towards the opening of the top wall 40.

The side walls 43 and the bottom wall 41 are preferably perforated, with holes smaller than the size of the insects that are captured in the collection cage 4. Since these insects have not been electrocuted because they are smaller, they are able to escape and fly away.

Finally, there are end walls 42 with holes 420 configured for the insertion of additional collection tanks, designed to prevent the accumulation of insects inside the collection cage 4.

Furthermore, the end walls 42 can be machined to provide support for an elongated element forming the lower portion of the support frame 1, such as element 12 in Figure 1, on which conductive wires 2 and 3 are wound, as described above and in relation to Figure 1.

The collection cage 4 is not intended exclusively to collect insects killed by contact with the conductive wires 2 and 3, but also to collect insects that are stunned or mutilated by contact with the conductive wires 2 and 3.

Once inside the collection cage, insects that are still alive cannot find a way out, either through the side walls 43 and the bottom wall 41 due to the size of the holes, or through the opening in the top wall 40, as they would risk coming into contact with the conductive wires 2 and 3 again.

The only way out could be through the end walls 42, through the holes 420, where they would be collected by additional collection tanks, not shown in the figure.

While the invention is susceptible to various modifications and alternative constructions, some preferred embodiments have been shown in the drawings and described in detail.

It should be understood, however, that there is no intention to limit the invention to the specific embodiment illustrated, but, on the contrary, it is intended to cover all modifications, alternative constructions, and equivalents that fall within the scope of the invention as defined in the claims.

The use of "for example," "etc.," "or" indicates non-exclusive alternatives without limitation unless otherwise indicated.

The use of 'includes' means "includes, but is not limited to" unless otherwise indicated.

## Claims

1. Device for the selective electrocution of flying insects comprising a support frame (1), which support frame (1) delimits an area (10) within which area (10) at least a first (2) and at least a second (3) conductor wire are arranged,
the first (2) and second (3) conductive wires being connected to a power source at a first and second voltage level, respectively,
the first (2) and second (3) conductive wires being arranged inside the support frame (1) so as to form rows parallel to each other (20, 30) and in such a way that the rows formed by the first conductive wire (20) alternate with the rows formed by the second conductive wire (30),
each row being spaced apart from the adjacent rows by a predetermined distance,
**characterized in that**
there is a control unit (5) interposed between the power supply source and the two conductive wires (2, 3), said control unit (5) comprising a high-voltage circuit (53) configured to generate electrical pulses.

2. Device according to claim 1, wherein said control unit (5) comprises means (54) for regulating the frequency of the pulses generated.

3. Device according to one or more of the preceding claims, wherein said control unit (5) comprises switching means for interrupting the power supply to the first (2) and second (3) conductive wires.

4. Device according to claim 3, wherein said control unit (5) comprises one or more detection sensors configured to detect the values of one or more corresponding parameters, said detection sensors being connected to said switching means in such a way as to interrupt the power supply to the first and second conductive wires when a predetermined threshold value of the detected parameter is reached.

5. Device according to claim 3, wherein said control unit comprises at least one rain detection sensor (57), which rain detection sensor (57) is connected to said switching means in such a way as to interrupt the power supply to the first and second conductive wires when a predetermined humidity threshold value is reached.

6. Device according to claim 5, wherein means for adjusting the humidity threshold value are provided.

7. Device according to claim 3, wherein a light detection sensor (58) is provided, which light detection sensor (58) is connected to said switching means so as to interrupt the power supply to the first and second conductive wires when a predetermined light threshold value is reached.

8. Device according to claim 7, wherein means for adjusting the light threshold value are provided.

9. Device according to one or more of the preceding claims, wherein said power supply source comprises at least one rechargeable battery, a recharging circuit comprising photovoltaic panels being provided.

10. Device according to one or more of the preceding claims, wherein the control unit (5) comprises one or more light elements (55, 56) configured to indicate the operating status of the device and/or the connection of the first and second conductive wires and/or the generation of pulses.

11. Device according to one or more of the previous claims, wherein there is a collection cage (4) for flying insects that are electrocuted by the first and second conductive wires, the collection cage having at least one wall (43) with a plurality of holes, which holes have predetermined dimensions and are smaller than the dimensions of the Vespa velutina.
